# EUROPEAN PATENT SPECIFICATION

(11) **EP 3 792 555 B1**
(45) Date of publication and mention of the grant of the patent: **14.06.2023**
(21) Application number: 20192435.4
(22) Date of filing: 24.08.2020
(51) Int. Cl.: F24D 3/10

(54) **EXPANSION VESSEL WITH MEMBRANE AND PUMP COMPRISING SUCH EXPANSION VESSEL**
AUSDEHNUNGSGEFÄSS MIT MEMBRAN UND PUMPE MIT SOLCH EINEM AUSDEHNUNGSGEFÄSS
CUVE D'EXPANSION DE MEMBRANE ET POMPE COMPRENANT UN TELLE CUVE D'EXPANSION

(30) Priority: 12.09.2019 IT 201900016181
(43) Date of publication of application: 17.03.2021
(73) Proprietor: Dab Pumps S.p.A., 35035 Mestrino (Padova) (IT)
(72) Inventor: SINICO, Francesco, 35035 MESTRINO (PD) (IT)
(74) Representative: De Filippis, Sara

(56) References cited:
- EP-A1- 0 684 429
- EP-A2- 0 896 195
- EP-A2- 1 582 820
- EP-B1- 0 684 429
- WO-A2-2009/131450
- DE-A1-102017 125 672
- DE-U1- 29 517 530

## Description

The present invention relates to the field of expansion vessels with a membrane, in particular it refers to an expansion vessel with a membrane made of plastic.

The realization of an expansion vessel with membrane that is simultaneously resistant to temperature changes, non-toxic when in contact with drinking water, while maintaining sufficient strength, is currently a major problem because creating and assembling such expansion vessels is complex to implement due to various and different structural limitations.

It is particularly important especially in the field of household and civil plumbing systems to control pressure variations due to temperature differences or abrupt changes in flow (so-called water hammer), as expansion vessels commonly prevent such variations from being absorbed by the system, which could be damaged.

In addition, the expansion vessels can act as a water reservoir for small withdrawals, with a corresponding reduction in the number of system pump starts, also in the event of leaks.

There are currently expansion vessels on the market that can be used in various sectors, for example: in the already-mentioned plumbing systems for the supply of water for civil use, to compensate for pressure variations due to temperature differences or a water hammer; in car cooling circuits to compensate for the effects of thermal expansion; in irrigation systems, both to avoid water hammers and to facilitate pressure regulation, and in hydraulics.

Among the types of expansion vessels currently used, there are the open-type expansion vessels and the closed-type expansion vessels, which may have different shapes and sizes.

In particular, the closed-type expansion vessel consists of a rigid container usually made of materials such as aluminium, cast iron, fibreglass, etc., divided into two caps welded together; there are two chambers of variable volume in the expansion vessel, one containing the fluid of the circuit (water, almost incompressible), the other containing air or gas (compressible) loaded at a certain pressure by means of a special valve.

There is a partition between the two chambers, which is a bag or elastic membrane (also defined as "lung"); the two most used variants differ in the positioning and operation of such membrane inside the vessel.

In the first of these variants, the expansion vessel consists of an outer casing (in cast iron, fibreglass, aluminium, etc.), a membrane, a water entry and an air inlet; in particular, the membrane is connected to the water entry and can vary its volume inside the expansion vessel due to the change in pressure in the adjacent chamber caused by the gas inlet or outlet, in the latter case by taking water into it and advantageously ensuring the water itself never comes into contact with the metal walls of the vessel. However, when the expansion vessel is not used, e.g. during storage before use, the membrane, which is empty, collapses inside it, bending; over time, the bending lines can become damage, both because of the characteristics of the elastomeric material of which the membrane is composed and the cyclic nature of the stress it is subjected to.

In the second variant, the expansion vessel also consists of an outer casing (made of cast iron, fibreglass, aluminium, etc.), a membrane, a water entry and an air inlet; in particular, the membrane is connected to the air inlet, resulting in an increase or decrease in the volume occupied by water, outside the membrane and inside the walls of the expansion vessel. In this case, when the expansion vessel is not used, the membrane is advantageously fully extended and full of air, in contact with the walls of the casing. While avoiding the above-mentioned problems deriving from the collapse of the membrane itself, this solution has the disadvantage of having the water in direct contact with the walls of the vessel while it is being used, increasing the risk of contamination and consequent toxicity.

A common characteristic of the two variants is that expansion vessels, especially the larger ones, must be resistant and strong enough to withstand their own weight, depending on the cases, to contain a certain amount of water therein and to support the motor connected to the vessels themselves.

Moreover, a common drawback of the variants described is related to the construction requirements, which require the presence of a welding line between the two caps that make up the outer casing of the expansion vessel. Although the presence of such a welding line makes it possible to simplify processes such as, for example, the transport of the vessel and the assembly/disassembly of the membrane, cyclic rubbing between the welding line and the membrane can cause cracks along its surface. Within the above-mentioned requirements, therefore, the main aim of this invention is to make an expansion vessel with membrane capable of overcoming the technical drawbacks mentioned above and, in particular, to make an expansion vessel with membrane that is safe from the point of view of water contamination and at the same time durable over the years.

A further aim of this invention is to make an expansion vessel with membrane that is strong enough.

Another aim of this invention is to make an expansion vessel that is compatible with contact with drinking water.

A further aim of this invention is to make an expansion vessel that is at least partially transparent so as to facilitate processes such as, for example, the detection of any foreign bodies trapped inside it and/or the assembly/disassembly of the membrane.

Another aim of this invention is to make an expansion vessel with membrane that is easily transportable, resistant to sudden temperature changes and UV rays.

A further aim of the invention is to obtain an expansion vessel with membrane which is simple and economical to make as compared to the advantages achieved.

These and other aims are achieved by an expansion vessel with membrane according to the invention, as will better emerge later in this description.

Preforms have been known for some time in the production of plastic material vessels, consisting of semi-finished products used in particular in blow-molding processes, and have a body with a more or less elongated tubular structure with a closed end.

At the opposite end there is a threaded mouth, of variable diameter, to be connected to the blowing machine, which size remains unchanged at the end of the process.

The body, on the other hand, precisely because of the nature of the process, undergoes a reduction in wall thickness during blowing, which will be all the greater, the greater the final volume of the vessel.

Such preforms, however, have the drawback of not being adapted to contain a membrane or an air inlet valve, thus not being adapted to act as an expansion vessel.

Another drawback is the size of traditional preforms, which are limited to a relatively small volume, unsuitable for making expansion vessels with a capacity of at least 20 I.

In an advantageous way, the plastic material expansion vessel with membrane can be made basically from a preform of non-blown polymeric material suitable for contact with drinking water and that is non-toxic and sufficiently robust.

In other embodiments, the plastic material expansion vessel with membrane is basically made from a preform of polymeric material of greater thickness than traditional preforms, which is blown to obtain a preset thickness such as to ensure greater strength, particularly suitable for large expansion vessels.

An expansion vessel with membrane and pump comprising such expansion vessel, with technical features that can be considered the closest state of the art to the following invention, features that are present in the preamble of the attached claim 1, are described, for example, in the documents EP1582820A2 (D1), DE29517530U1 (D2), EP0896195A2 (D3), EP0684429A1 (D4), DE102017125672A1 (D5) and WO2009/131450A2 (D6).The object of the invention is therefore an expansion vessel for containing and dispensing a liquid, through the compression by a fluid, comprising a main body, a membrane, a mouth for the entry of the liquid and a valve for the inlet of the gas.

In detail, the main body is made of at least partially transparent plastic material so as to allow the detection of any foreign bodies trapped inside it and/or possible damage to the membrane.

Preferably, according to the invention, the main body of the expansion vessel is a preform.

In other embodiments, the above-mentioned preform could be used, if of suitable initial thickness, to be blown in such a way as to obtain a wall thickness compatible both with the use to be made of it and with the capacity it will contain.

This feature would allow creating expansion vessels of different sizes and capacities, always obtaining a suitable thickness to support the weight of the liquid to be contained.

The preform advantageously has an inlet at a first end, into/from which the membrane can be inserted and extracted.

There may be, at a second end, a support element adapted to fix the membrane inside the preform.

In an advantageous way, the above-mentioned support element inside the membrane can comprise a valve adapted to the inlet of the gas. Moreover, again according to the invention, the main body of the expansion vessel can be obtained by molding.

Again, the main body can be made in one piece so as to present a totally smooth surface internally, so as to avoid rubbing of the membrane that could cause damage.

In this case, the main body can comprise integrated supporting means, which allow it to be supported when in use.

A pump for plants can advantageously comprise the expansion vessel described above.

Further features and advantages of the plastic material expansion vessel with membrane according to this invention will be more apparent from the following description, referring to three variants of preferred and exemplifying, but not limiting, embodiments, and from the accompanying drawings, wherein:
- Figure 1 schematically shows a first embodiment of the expansion vessel, in longitudinal section, wherein the vessel is in a state of disuse, according to the invention;
- Figure 2 relates to the expansion vessel in Figure 1, wherein the vessel is in the intermediate filling stage;
- Figure 3 relates to the expansion vessel in Figure 1, wherein the vessel is in the advanced filling stage;
- Figure 4 schematically shows a second embodiment of the expansion vessel, in longitudinal section, wherein the vessel is in the disuse stage, according to the invention;
- Figure 5 shows the expansion vessel in Figure 4 which, after being blown, is still in the disuse stage;
- Figure 6 shows the expansion vessel in Figure 4, in an intermediate filling stage;
- Figure 7 shows the expansion vessel in Figure 4, in an advanced filling stage;
- Figure 8 schematically shows the detail of the membrane coupling system, applicable to the expansion vessels in Figures 1 and 4;
- Figure 9 schematically shows the insertion stage of the membrane into any of the expansion vessels in Figure 1 or Figure 4.

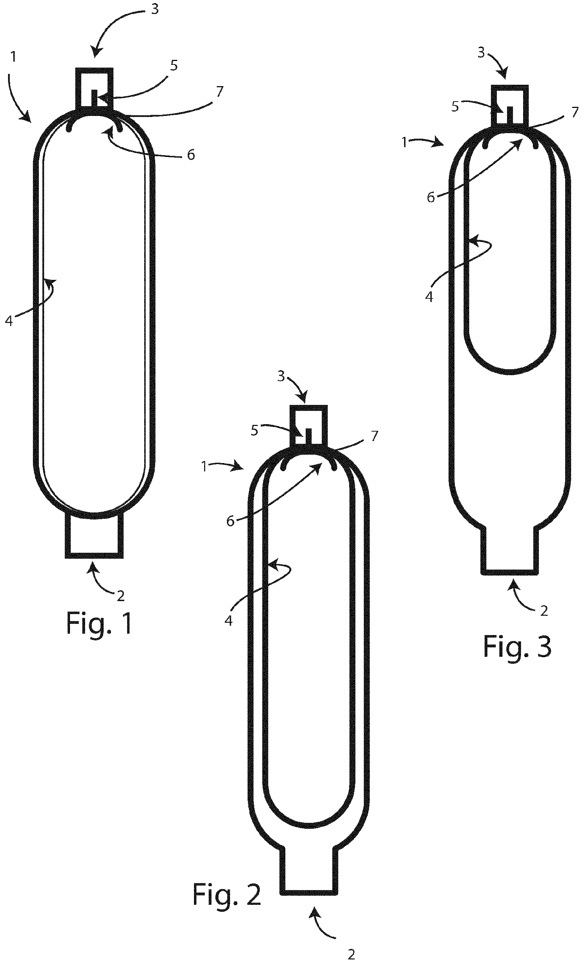

With reference to the drawings mentioned, the expansion vessel with membrane the object of this invention comprises a plastic material preform. In particular, according to a first embodiment of this invention, the plastic material expansion vessel with membrane (Figures 1, 2 and 3) comprises a main body 1, consisting of a preform 1 used without being blown, which has, on opposed sides, an entry 2 for liquid, e.g. water, located below the installation position of the vessel, and a valve 3 for the inlet of gas, e.g. air, located above the installation position of the vessel. In the upper part of the preform 1, in correspondence with the gas inlet valve 3, there is a hole 7 in which a screw 5 interlocks which, in its internal end with respect to the expansion vessel, has a support element 6 which allows a membrane 4 to be fixed to the preform 1 on the side of gas inlet valve 3.

In a further variant of the first embodiment, the plastic material expansion vessel with membrane (Figures 1, 2 and 3) has the elements therein comprised, in inverted position with respect to what was described above and with respect to the sides of the preform.

Therefore, the mouth 2 for liquid, e.g. water, is located above the installation position of the vessel, and the valve 3 for the inlet of gas, e.g. air, is located below the installation position of the vessel.

In particular, in the first embodiment thereof, the operation of the plastic material expansion vessel the object of this invention is substantially the following.

In the non-use position, shown in detail in the attached Figure 1, the elastic membrane 4 is completely extended and full of air coming from the gas inlet valve 3 for this reason; said membrane 4 is substantially in contact with the walls of said preform 1 and the mouth 2 for the liquid is completely obstructed by the overall dimensions of said membrane 4 full of air. Figures 2 and 3 show two different but consecutive moments of what is the filling or emptying stage of the expansion vessel, according to which, through a variation of the pressure of the air entering from said gas inlet valve 3, there is an increase or decrease of the volume occupied by the water outside said elastic membrane 4 and inside the walls of said preform 1, entering from said entry 2 for liquid.

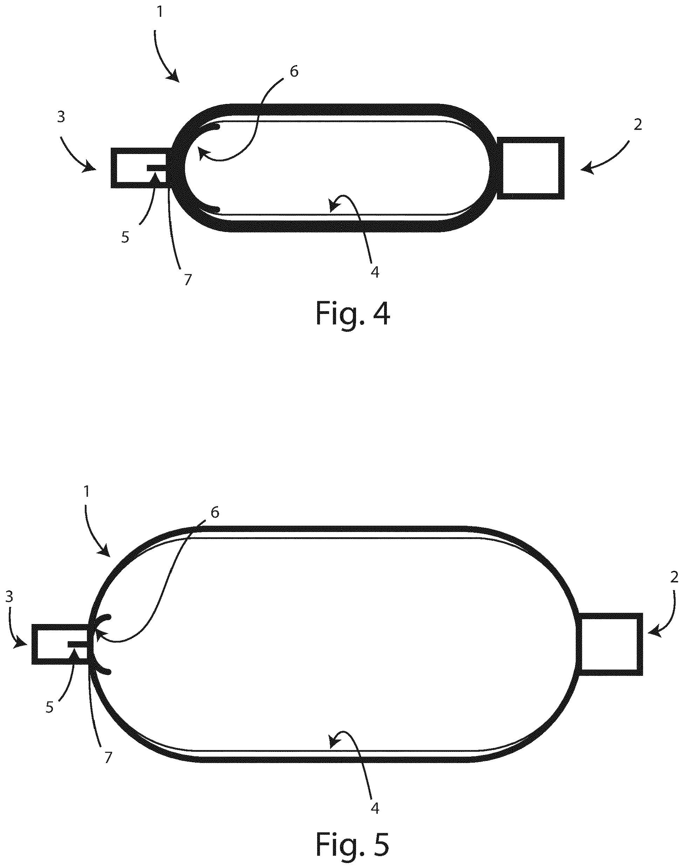

Alternatively, in a second preferred variant of this invention, suitable in particular for large expansion vessels, referring to Figures 4, 5, 6 and 7, the plastic material expansion vessel with membrane is substantially made starting from a preform 1 of greater thickness than traditional preforms, which is blown, for example by blow-molding, to obtain a preset thickness suitable to support the required load, having on opposed sides, an entry 2 for liquid, e.g. water, and a valve 3 for gas inlet, e.g. air. In the part of the preform 1 that is in correspondence with the gas inlet valve, there is a hole 7 in which a screw 5 is interlocked which, in its internal end with respect to the expansion vessel, has a support element 6 that allows an elastic membrane 4 to be fixed to the preform 1 on the side of the gas inlet valve 3.

In particular, in a second application variant, the operation of the plastic material expansion vessel, which is the object of the present invention, is substantially as follows.

In the non-use position, shown in detail in the attached Figure 4, the preform 1 with increased thickness is shown, which after a blowing process, has such a volume as to allow increasing the capacity of said expansion vessel, the elastic membrane 4 is completely extended and full of air coming from the gas inlet valve 3 for this reason, said membrane 4 is totally in contact with the walls of said preform 1 and the mouth 2 for the liquid is completely obstructed by the overall dimensions of said membrane 4 full of air.

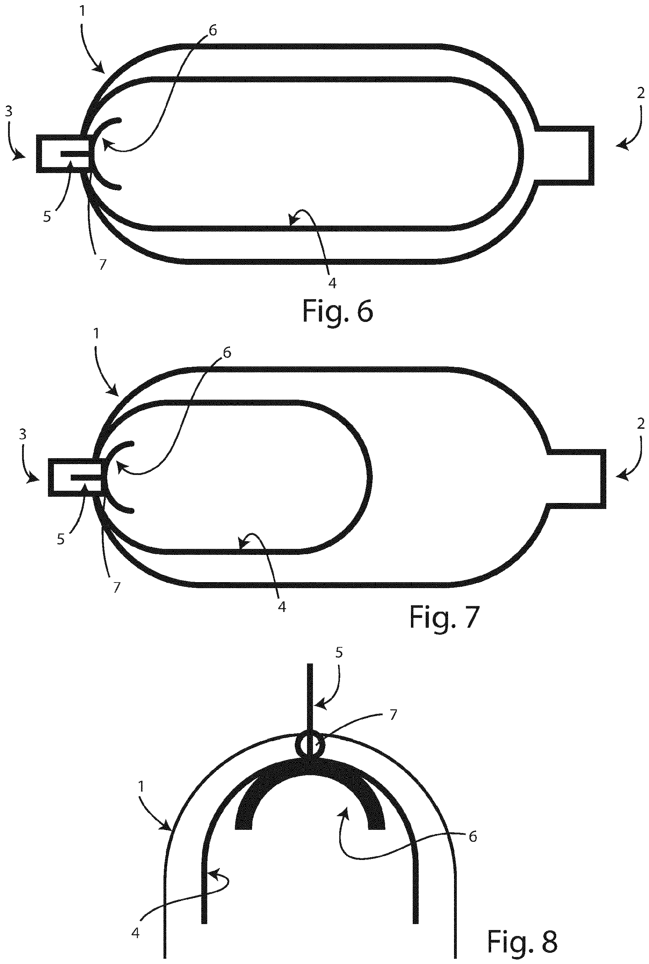

Figures 6 and 7 show two different but consecutive moments of what is the filling or emptying stage of the expansion vessel, according to which, through a variation of the pressure of the air entering from said gas inlet valve 3, there is an increase or decrease of the volume occupied by the water outside said elastic membrane 4 and inside the walls of said preform 1, entering from said entry 2 for liquid.

Figure 8 shows a further detail of the mechanism below the gas inlet valve required to fix the membrane inside the preform in both embodiments.

On the side of the gas inlet valve 3, there is a hole 7 in said preform 1, in which a screw 5 is interlocked which, in its internal end with respect to the expansion vessel, has a support element 6 that allows the elastic membrane 4 to be fixed to the preform 1 on the side of the gas inlet valve 3.

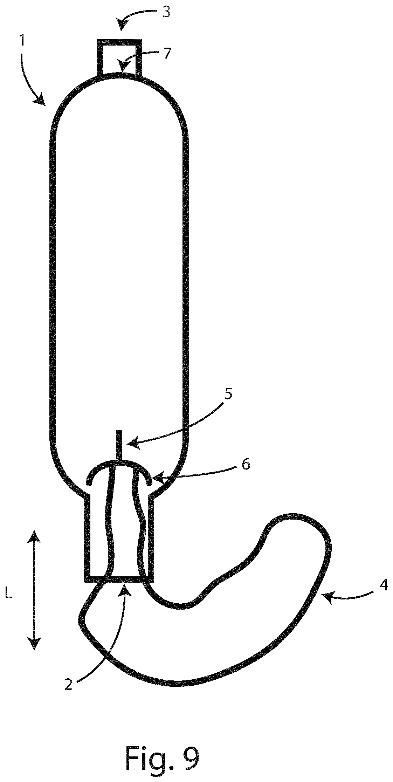

Figure 9 describes the insertion or extraction stage of the membrane 4 into/from the preform 1 through the mouth 2 of the liquid, respectively according to the two different directions of the longitudinal direction indicated with L in Figure 9; in particular, the coupling system formed by the screw 5, its support element 7, screw and interlock inside the hole 7 of the preform 1 on the side of the gas inlet valve 3.

According to a further embodiment that is relative to both the embodiments described above (Figures 1 to 7), the operating mechanism of the expansion vessel can be opposite to what was described above, more in detail: the membrane 4 is initially empty and connected to the entry 2 of the liquid. During two different, but consecutive, moments of what is the filling or emptying stage of the expansion vessel, the membrane 4 varies the volume of the liquid contained in it (entering or exiting from said entry 2 of the liquid) through a change in pressure of the air entering or exiting from said external gas inlet valve 3 with respect to said membrane 2. In this way, in this embodiment, the liquid is contained within the membrane 4 and therefore not in contact with the walls of the expansion vessel.

In a further embodiment of this invention, the plastic material expansion vessel with membrane, comprising the same characteristics as the embodiments described above, is made through the use of a main body obtained through the molding technique in such a way as to advantageously have expansion vessels with the desired dimensions and shapes.

In this way, a plastic material expansion vessel with membrane made from a plastic material preform is obtained.

The expansion vessel thus created, as described above and according to the examples illustrated in detail in the accompanying Figures 1, 2, 3, 4, 5, 6, 7, 8 and 9, therefore has:
- simplicity and speed in the assembly and disassembly operations of the membrane;
- reliability and safety in use, as compared to known solutions;
- suitability to contain drinking water;
- safety from the point of view of water contamination;
- greater robustness than known solutions;
- versatility and adaptability to any type of situation and volume of liquid to be contained;
- greater resistance of the expansion vessel itself;
- ease in transport processes;
- resistance to sudden temperature changes and UV rays;
- limited cost, as compared to traditional solutions, in relation to the benefits achieved.

The invention described can be modified and adapted in several ways without thereby departing from the scope of the inventive concept. Further, all the details can be replaced by other technically-equivalent elements.

Lastly, the components used, providing they are compatible with the specific use, as well as the dimensions, may vary according to requirements and the prior art.

Where the characteristics and the techniques mentioned in the following claims are followed by reference signs, such reference signs have been used only with the aim of increasing the intelligibility of the claims themselves and, consequently, the reference signs do not constitute in any way a limitation to the interpretation of each element identified, purely by way of example, by the reference signs.

## Claims

1. Expansion vessel for containing and dispensing a liquid through the compression of a gas, comprising a main body (1), a membrane (4), a mouth (2) for the entry of the liquid and a valve (3) for the inlet of the gas, **characterized in that** said main body (1) is made of at least partially transparent plastic material.

2. Expansion vessel according to claim 1, **characterized in that** said main body is a preform (1) for the realization of blown plastic container, provided with an inlet (2; 7) in correspondence with a first end.

3. Expansion vessel according to claim 2 **characterized in that** said membrane (4) is suitable to inserted and/or extracted from said preform (1) through the inlet (2; 7).

4. Expansion vessel as in claim 2 or 3, **characterized in that** it comprises an hole (7) at a second end of said preform (1), and a support element (6) suitable to fix said membrane (4) in said preform (1), the support element (6) being fixed to said hole (7).

5. Expansion vessel according to claim 4, **characterized in that** the support element (6) comprises said valve (3) for the inlet of the gas inside said membrane (4).

6. Expansion vessel according to one of claims 2-5, **characterized in that** said preform (1) is blown in order to obtain a preset thickness.

7. Expansion vessel according to one of claims 1-5, **characterized in that** said main body (1) is obtained by molding.

8. Expansion vessel according to one of claims 1-7, **characterized in that** said main body (1) is obtained in a single piece.

9. Expansion vessel according to claim 8, **characterized in that** said main body (1) has integrated supporting means, suitable to support said main body (1) when in use.

10. Pump for plants **characterized in** comprising an expansion vessel according to one of claims 1-9.

## Patentansprüche

1. Ausdehnungsgefäß zum Aufnehmen und Abgeben einer Flüssigkeit durch Verdichtung eines Gases, umfassend einen Hauptkörper (1), eine Membran (4), eine Mündung (2) für den Eintritt der Flüssigkeit und ein Ventil (3) für den Eintritt des Gases, **dadurch gekennzeichnet, dass** der besagte Hauptkörper (1) aus zumindest teilweise transparentem Kunststoffmaterial hergestellt ist.

2. Ausdehnungsgefäß nach Anspruch 1, **dadurch gekennzeichnet, dass** der besagte Hauptkörper ein Vorformling (1) zur Verfertigung eines geblasenen Kunststoffbehälters ist, der mit einem Einlass (2; 7) in Verbindung mit einem ersten Ende versehen ist.

3. Ausdehnungsgefäß nach Anspruch 2, **dadurch gekennzeichnet, dass** die besagte Membran (4) dazu geeignet ist, durch den Einlass (2; 7) in den besagten Vorformling (1) eingeführt und/oder aus ihr herausgezogen zu werden.

4. Ausdehnungsgefäß nach Anspruch 2 oder 3, **dadurch gekennzeichnet, dass** es ein Loch (7) an einem zweiten Ende des besagten Vorformlings (1) und ein Stützelement (6) umfasst, das geeignet ist, die besagte Membran (4) in dem besagten Vorformling (1) zu befestigen, wobei das Stützelement (6) an dem besagten Loch (7) befestigt ist.

5. Ausdehnungsgefäß nach Anspruch 4, **dadurch gekennzeichnet, dass** das Stützelement (6) das besagte Ventil (3) für den Einlass des Gases in der besagten Membran (4) umfasst.

6. Ausdehnungsgefäß nach einem der Ansprüche 2 bis 5, **dadurch gekennzeichnet, dass** der besagte Vorformling (1) geblasen wird, um eine voreingestellte Dicke zu erhalten.

7. Ausdehnungsgefäß nach einem der Ansprüche 1 bis 5, **dadurch gekennzeichnet, dass** der besagte Hauptkörper (1) durch Formen erhalten wird.

8. Ausdehnungsgefäß nach einem der Ansprüche 1 bis 7, **dadurch gekennzeichnet, dass** der besagte Hauptkörper (1) in einem einzigen Stück erhalten wird.

9. Ausdehnungsgefäß nach Anspruch 8, **dadurch gekennzeichnet, dass** der besagte Hauptkörper (1) integrierte Stützmittel aufweist, die geeignet sind, den besagten Hauptkörper (1) im Gebrauch zu stützen.

10. Pumpe für Anlagen, **dadurch gekennzeichnet, dass** sie ein Ausdehnungsgefäß nach einem der Ansprüche 1 bis 9 umfasst.

## Revendications

1. Un vase de dilatation pour contenir et distribuer un liquide à travers la compression d'un gaz, comprenant un corps principal (1), une membrane (4), une bouche (2) pour l'entrée du liquide et une vanne (3) pour l'entrée du gaz, **caractérisée par le fait que** ledit corps principal (1) est fait d'au moins un matériau plastique au moins partiellement transparent.

2. Un vase de dilatation selon la revendication 1, **caractérisé par le fait que** le corps principal est une préforme (1) pour la réalisation de conteneurs en plastique soufflés, fourni avec une entrée (2; 7) en correspondance avec une première extrémité.

3. Un vase de dilatation selon la revendication 2 **caractérisé par le fait que** ladite membrane (4) est adaptée à ladite insertion et/ou extraite de ladite préforme (1) à travers l'entrée (2; 7).

4. Un vase de dilatation comme revendiqué selon la revendication 2 ou 3, **caractérisée par le fait qu'**il comprend un trou (7) à une seconde extrémité de ladite préforme (1), et un élément de support (6) apte à fixer ladite membrane (4) dans ladite préforme (1), l'élément de support (6) étant fixé à ce trou (7).

5. Un vase de dilatation selon la revendication 4, **caractérisé par le fait que** l'élément de support (6) comprend ladite vanne (3) pour l'entrée du gaz à l'intérieur de ladite membrane (4).

6. Un vase de dilatation selon l'une des revendications 2-5, **caractérisé par le fait que** ladite préforme (1) est soufflée afin d'obtenir une épaisseur prédéfinie.

7. Un vase de dilatation selon l'une quelconque des revendications 1-5, **caractérisé par le fait que** le corps principal (1) est obtenu par moulage.

8. Un vase de dilatation selon l'une quelconque des revendications 1-7, **caractérisée par le fait que** le corps principal (1) est obtenu en une seule pièce.

9. Un vase de dilatation selon la revendication 8, **caractérisée par le fait que** le corps principal (1) dispose de moyens de soutien intégré, capable de soutenir ledit corps principal (1) lorsqu'il est en cours d'utilisation.

10. Une pompe pour plantes est **caractérisée par le fait qu'**elle comprend un vase de dilatation selon l'une quelconque des revendications 1-9.
